# EUROPÄISCHE PATENTSCHRIFT

(11) **EP 1 158 376 B1**
(45) Veröffentlichungstag und Bekanntmachung des Hinweises auf die Patenterteilung: **26.01.2005**
(21) Anmeldenummer: 01111235.6
(22) Anmeldetag: 15.05.2001
(51) Int. Cl.: G05B 13/02

(54) **Gerät mit einem Regelkreis**
Apparatus with a control circuit
Appareil avec un circuit de contrôle

(30) Priorität: 16.05.2000 DE 10023690
(43) Veröffentlichungstag der Anmeldung: 28.11.2001
(73) Patentinhaber: Philips Intellectual Property & Standards GmbH, 20099 Hamburg (DE); Koninklijke Philips Electronics N.V., 5621 BA Eindhoven (NL)
(72) Erfinder: Rumpf, Horst, 52064 Aachen (DE); Kreutz, Matthias, 52064 Aachen (DE)
(74) Vertreter: Volmer, Georg, Dipl.-Ing.

(56) Entgegenhaltungen:
- EP-A- 0 553 356
- WO-A-99/67946
- US-A- 5 475 761
- US-A- 5 936 792

## Beschreibung

Die Erfindung betrifft ein Gerät zum Lesen oder Schreiben von Speichermedien, das ein Laufwerk mit einem Abtatstelement und einen Regelkreis, welcher eine Feed-Forward-Filteranordnung und eine Regleranordnung aufweist, hat.

Laufwerke für Speicherplattenmedien (z.B. CD, DVD, MD) müssen gegenüber Erschütterungen möglichst unempfindlich sein. Dies trifft besonders auf Laufwerke in Fahrzeugen und auf tragbare Geräte zu. Um die bei Erschütterungen auftretenden Aussetzer beim Lesen oder Schreiben der Speichermedien zu vermeiden, werden unter anderem Stoßdämpfersysteme verwendet. Diese können rein elektronisch gesteuert oder auf elektromechanischem Weg funktionieren.

Ein elektronisch gesteuertes Stoßdämpfersystem für ein Laufwerk der oben genannten Art ist aus EP 0 572 789 B1 bekannt. Es misst mittels einer Beschleunigungsmesseinrichtung die auftretenden Beschleunigungen und berechnet die durch die Beschleunigung wirkenden Kräfte. Die Beschleunigungsmesseinrichtung gibt dabei ein verstärktes elektrisches Signal aus, welches in einer Steuereinrichtung verarbeitet wird. Diese wiederum steuert eine Leseeinheit des Laufwerks so, dass die Leseeinheit die auf dem Speicherplattenmedium auszulesende Spur zentriert ausliest, bzw. Abweichungen von der auszulesenden Spur möglichst gering hält.

Aus der US 5,936,792 ist ein Positions-adaptiver Positionierungsmechanismus bekannt, bei dem ein Lesekopf an eine Zielposition gebracht werden soll, wobei die Veränderung der Position des Lesekopfes gemessen wird und diese Messwerte mittels einem einzelnen adaptiv geregelten Verstärker in einen Ansteuerwert des Lesekopfes gewandelt werdrn.

Die vorliegende Erfindung hat nun die Aufgabe, die Wirkungsweise eines elektronischen Schaltkreises zur Vibrations-Kompensation bei einem derartigen Laufwerk zu verbessern und eine verbesserte Rüttelfestigkeit zu erreichen.

Die Aufgabe wird erfindungsgemäß dadurch gelöst, dass ein Gerät mit den Merkmalen des unabhängigen Hauptanspruchs 1 vorgesehen ist.

Auf diese Weise ist es möglich, das Ansprechverhalten eines elektronischen Schaltkreises zur Vibrations-Kompensation sowohl im Hinblick auf unterschiedliche Amplituden als auch im Hinblick auf unterschiedliche Frequenzen, welche je nach Art der Erschütterungen auftreten, zu optimieren. Dazu ist der Regelkreis adaptiv ausgelegt, wodurch die Parameter des Regelkreises der jeweiligen Erschütterung angepasst eingestellt werden können. Außerdem können so noch andere Störgrößen wie verändertes Verhalten der Lese-/Schreibkopfführungsmechanik aufgrund von Temperaturschwankungen, Toleranzen bei Bauteilen sowie beschädigte oder verschmutzte Speicherplattenmedien mitberücksichtigt werden.

In der Ausgestaltung nach Anspruch 2 ist vorgesehen, dass der Adaptionsalgorithmus auf einem Mikroprozessor implementiert ist. Vorteilhafter Weise ist dieser Mikroprozessor ein Digitaler Signalprozessor (DSP). DSPs sind oft verwendete Standardprozessoren, welche kostengünstig sind und eine schnelle und parallele Verarbeitung von mehreren digitalen Signalen erlauben. Der DSP erlaubt dadurch eine besonders schnelle Berechnung der Parameter der Regler und des Feed Forward Filters, wodurch die gewünschte umgehende Anpassung der Parameter an sich schnell verändernde Störsignale möglich ist.

Durch die Ausgestaltung nach Anspruch 3 werden Laufwerke für Speicherplattenmedien, insbesondere tragbare Geräte und Geräte für den Einsatz im Auto oder anderen Transportmitteln, vor häufig auftretenden Erschütterungen besonders effektiv geschützt, da das adaptive Regelungssystem äußere und innere Störungen schneller erkennen und ausregeln kann als herkömmliche Systeme.

Ein Ausführungsbeispiel der Erfindung wird nachfolgend an Hand einer Figur näher erläutert.

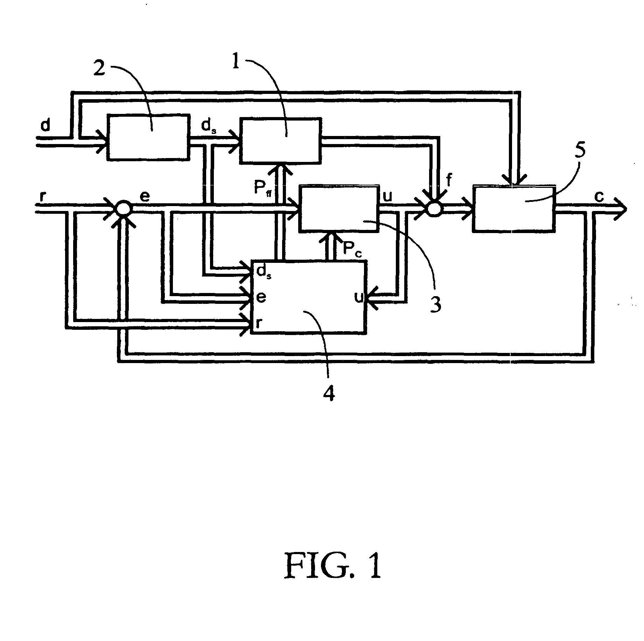

Figur 1 zeigt ein Blockschaltbild eines erfindungsgemäßen Regelkreises in einem verbesserten elektronischen Schaltkreis zur Vibrations-Kompensation.

In Laufwerken für Speicherplattenmedien müssen die Datenspuren möglichst präzise abgetastet werden, um eine fehlerfreie Wiedergabe bzw. einen fehlerfreien Schreibprozess zu ermöglichen. Ziel des erfindungsgemäßen Regelkreises ist es deshalb, in einem Laufwerk 5 ein Abtastelement (z.B. eine optische Einheit), welches die Datenspuren eines Speicherplattenmediums ausliest oder beschreibt, auch bei Erschütterungen oder sonstigen Abweichungen so exakt wie möglich in seinem Abtastpunkt c den Datenspuren nachzuführen. Dazu werden die auf das Laufwerk 5 einwirkenden Kräfte über geeignete Sensoren 2 erfasst. Dafür eignen sich u.a. piezoelektrische Beschleunigungsmesssensoren, welche dreidimensional einwirkenden Beschleunigungskräfte erfassen können. Die Sensoren 2 wandeln die als Störsignale d erfassten Beschleunigungskräfte in elektrische Signale d, um, welche im Regelkreis verarbeitet werden können. Die elektrischen Störsignale d, werden einer sogenannten Feed-Forward-Filteranordnung 1 zugeführt und dienen gleichzeitig als ein Einganssignal eines digitalen Signalprozcssors (DSP) 4. Zur Definition eines Feed-Forward-Filters wird an dieser Stelle auf einen Beitrag von Philips zum SAE Konferenzpapier Nr. 981152 (SAE International Congress and Exposition in Detroit, Michigan 23. 26. Februar 1998) verwiesen, welcher die Wirkungsweise eines Feed-Forward-Filters beschreibt.

Die Feed-Forward-Filteranordnung 1 gibt ein Ausgangssignal als Störgrößenaufschaltung f an das Laufwerk 5 weiter, wobei das Laufwerk 5 hier der Regelstrecke in einem Regelkreis entspricht. An weiteren Eingängen des DSP 4 liegen Führungsgrößen r, die beim Regelprozess auftretenden Abweichungen in Form von Fehlersignalen e und Stellgrößen u an. Die Ausgänge des DSP 4 adaptieren nun zum einen die Parameter P_{ff} der Feed-Forward-Filteranordnung 1 und zum anderen die Parameter P_{c} einer Regleranordnung (Controller) 3.

Für einen optimalen Abtastvorgang im Laufwerk 5 muss der Controller 3 das System derart ausregeln, dass die Fehlersignale e möglichst klein werden. Dazu ist neben der Störgrößenaufschaltung f eine Anpassung der Parameter P_{ff} der Feed-Forward-Filteranordnung 1 und der Parameter P_{c} des Controllers 3 vorgesehen. Um diese Anpassung vornehmen zu können, ist auf dem DSP 4 ein sogenannter Adaptionsalgorithmus implementiert, welcher aus den Führungsgrößen r, den Fehlersignalen e, den Störsignalen d, und den Stellgrößen u die optimalen Parameter P_{c} und P_{ff} berechnet. Auf diese Weise können der Controller 3 und die Feed-Forward-Filteranordnung 1 im Regelbetrieb so gesteuert werden, dass sie auf unterschiedliche äußere Einwirkungen wie kurze Schläge, Schocks, anhaltende Vibrationen und Bauteilveränderungen im Laufwerk 5 aufgrund von Temperaturschwankungen mit jeweils angepassten Regel- bzw. Filtercharakteristiken reagieren. Die selbe Funktionsweise gilt natürlich auch für das Auftreten von inneren Störungen wie Bauteilzoleranzen, Offsets, temperatur- und lebensdauerabhängige Größen und verschmutzte Speicherplattenmedien.

Durch das adaptive Regelverhalten muss man bei der Auslegung von Controller 3 und Feed-Forward-Filteranordnung 1 keine Kompromisse eingehen, was das genaue Einhalten des Abtastpunkts c erleichtert und somit die Abtastgenauigkeit verbessert. Dies trifft besonders auf Laufwerke zu, in denen DVDs abgetastet werden. Da hier die einzelnen Bits der Datenspuren viel dichter gedrängt sind als auf CDs, sind sie grundsätzlich auf eine besonders präzise Lese-/Schreibeinrichtung angewiesen, das sonst schon bei geringen Erschütterungen oder sonstigen Schwankungen im Laufwerk 5 Fehler auftreten können.

Trotz der durch den elektronischen Schaltkreis zur Vibrations-Kompensation deutlich verbesserten Immunität gegenüber Störungen kann es sinnvoll sein, einen zusätzlichen Speicherbaustein vorzusehen, indem die ausgelesenen Daten des Speicherplattenmediums, insbesondere bei DVDs, schneller ausgelesen als wiedergegeben sowie eine bestimmte Zeit lang zwischengespeichert und erst dann wiedergegeben werden. Damit ist immer ein Datenvorrat vorhanden, so dass die Wiedergabe auch im Fall einer nicht mehr ausregelbaren Störung, wie z.B. bei einem heftigen Schlag auf das Gehäuse eines solchen Laufwerks 5, nicht ins Stocken gerät.

## Patentansprüche

1. Gerät zum Lesen oder Schreiben von Speichermedien, das ein Laufwerk (5) mit einem Abratstelement und einen Regelkreis, der zur Steuerung des Abtatstelementes vorgesehen ist, mit einer Feed-Forward-Filteranordnung (1) und einer Regleranordnung (3) aufweist, wobei eine Adaption von Parametern (P_{ff}) der Feed-Forward-Filteranordnung (1) und von Parametern (P_{c}) der Regleranordnung (3) während des Betriebs des Geräts vorgesehen ist.

2. Gerät nach Anspruch 1,
**dadurch gekennzeichnet,**
**dass** die Adaption mittels eines Adaptionsalgorithmus durchgeführt wird, der auf einem Mikroprozessor (4), insbesondere einem digitalen Signalprozessor (4), implementiert ist.

3. Gerät nach Anspruch 1 oder 2,
**dadurch gekennzeichnet,**
**dass** durch eine Adaption der Parameter (P_{ff}) der Feed-Forward-Filteranordnung (1) und der Parameter (P_{c}) der Regleranordnung (3) während des Betriebs des Geräts auftretende Vibrationen und innere Störungen kompensiert werden.

4. Gerät nach einem der Ansprüche 1 bis 3,
**dadurch gekennzeichnet,**
**dass** es einen Sensor (2) zur Messung von Störungen, insbesondere Beschleunigungskräften, gibt, der mit der Feed-Forward-Filteranordnung (1) gekoppelt ist.

5. Gerät nach Anspruch 4,
**dadurch gekennzeichnet,**
**dass** die Adaption in Abhängigkeit von den gemessenen Störungen erfolgt.

## Claims

1. An apparatus for reading or writing storage media, comprising a drive (5) with a scanning element and a control circuit designed for controlling the scanning element, which control circuit comprises a feed-forward filter arrangement (1) and a controller (3),
wherein an adaptation of parameters (P_{ff}) of the feed-forward filter arrangement (1) and of parameters (P_{c}) of the controller (3) is effected during operation of the apparatus.

2. An apparatus as claimed in claim 1, **characterized in that** the adaptation is carried out by means of an adaptation algorithm which is implemented on a microprocessor (4), in particular a digital signal processor (4).

3. An apparatus as claimed in claim 1 or 2, **characterized in that** vibrations and internal imbalances occurring during operation of the apparatus are compensated through adaptation of the parameters (P_{ff}) of the feed-forward filter arrangement (1) and of the parameters (P_{c}) of the controller (3).

4. An apparatus as claimed in any one of the claims 1 to 3, **characterized in that** a sensor (2) is present for the measurement of imbalances, in particular of acceleration forces, which sensor is coupled to the feed-forward filter arrangement (1).

5. An apparatus as claimed in claim 4, **characterized in that** the adaptation takes place in dependence on the measured imbalances.

## Revendications

1. Appareil pour la lecture ou l'enregistrement de supports d'enregistrement qui présente un mécanisme d'entraînement (5) avec un élément de balayage et un circuit de réglage prévu pour la commande de l'élément de lecture avec un dispositif de filtrage feed forward (1) et un dispositif de réglage (3), une adaptation des paramètres (P_{ff}) du dispositif de filtrage feed forward (1) et des paramètres (P_{c}) du dispositif de réglage (3) étant prévue pour le fonctionnement de l'appareil.

2. Appareil selon revendication 1, **caractérisé en ce que** l'adaptation est effectuée à l'aide d'un algorithme d'adaptation qui est implémenté sur un microprocesseur (4) en particulier un processeur de signaux numérique (4).

3. Appareil selon la revendication 1 ou 2, **caractérisé en ce que** les vibrations et perturbations internes produites pendant le fonctionnement de l'appareil sont compensées par une adaptation des paramètres (P_{ff}) du dispositif de filtrage feed-forward (1) et des paramètres (P_{c}) du dispositif de réglage (3).

4. Appareil selon l'une des revendications 1 à 3, **caractérisé en ce qu**'il y a un capteur (2) pour la mesure de perturbations, en particulier de forces d'accélération, qui est couplé au dispositif de filtrage feed-forward (1).

5. Appareil selon la revendication 4, **caractérisé en ce que** l'adaptation intervient en fonction des perturbations mesurées.
